# FASCICULE DE BREVET EUROPEEN

(11) **EP 1 000 878 B1**
(45) Date de publication et mention de la délivrance du brevet: **24.03.2004**
(21) Numéro de dépôt: 99490033.0
(22) Date de dépôt: 09.11.1999
(51) Int. Cl.: B65D 88/66, B65G 65/44

(54) **Silo destiné au stockage de produits pulvérulents et présentant un fond vibrant**
Silo zum Lagern von pulverförmiger Materialien mit Rüttelboden
Silo for storing pulverulent materials with vibrating bottom

(30) Priorité: 12.11.1998 FR 9814369
(43) Date de publication de la demande: 17.05.2000
(73) Titulaire: Industrie Services et Conseils I.S.E.R.C.O. S.A., 59417 Gondecourt (FR)
(72) Inventeur: Haquette, Michel, 59147 Gondecourt (FR)
(74) Mandataire: Duthoit, Michel

(56) Documents cités:
- EP-A- 0 089 448
- EP-A- 0 130 255
- DE-A- 2 504 832
- DE-A- 19 723 672
- FR-A- 2 637 270

## Description

La présente invention concerne un silo notamment vertical, destiné au stockage de produits pulvérulents par exemple, et présentant un fond vibrant, notamment de forme tronconique, apte à favoriser l'écoulement de la matière.

Bien que plus particulièrement développée dans le cadre du stockage en silo de poudre finement divisée, l'invention trouvera également son application dans tous les secteurs de l'activité économique où l'on est amené à faire transiter dans des conteneurs, trémies ou autres, de la matière ne permettant pas une vidange spontanée sous le seul fait de la gravité.

Par exemple, dans le cadre du stockage en silo de produits solides, tels que notamment des farines ou du talc, qui présentent une granulométrie inférieure au millimètre, la gravité n'entraîne pas spontanément l'écoulement.

En effet, de telles poudres, soumises à la pression exercée par leur propre poids, forment dans la partie inférieure du silo, qui est généralement de forme tronconique, une voûte qui obture l'orifice inférieur du silo par lequel elles devraient s'écouler.

Ainsi, si l'on veut extraire de la matière du silo, il faut commencer par briser la voûte formée par le produit pulvérulent.

A cet égard, l'une des techniques connues consiste à placer dans la partie du cône du silo où se forme la voûte, un élément appelé fond vibrant.

Cet élément peut être en outre muni intérieurement d'un déflecteur central reprenant les charges statiques du produit stocké dans le silo, notamment la pression due à son poids.

Cela étant, pour permettre l'écoulement de la matière en brisant la voûte, on fait vibrer l'ensemble du fond du silo, et plus précisément son enveloppe extérieure, par l'intermédiaire d'un moteur à balourd.

Cette vibration diffusée dans le produit stocké permet aux particules de se déplacer entre elles et ainsi de les faire passer de l'état de frottement à l'état de glissement. Ces changements d'états favorisent l'écoulement.

Selon ce type de matériel, il est nécessaire d'empêcher la transmission des vibrations de l'élément tronconique du fond du silo au fond vibrant au reste du corps du silo.

En effet, une vibration trop largement diffusée dans le bas du stockage peut entraîner le tassement des produits solides dans l'ensemble du silo, ce qui irait à l'encontre du but recherché.

Pour cela, il est connu de disposer d'un fond vibrant comportant un rebord supérieur périphérique plan, réalisé en regard d'un rebord inférieur correspondant du silo, en vue de leur liaison, cette dernière s'effectuant par l'intermédiaire d'un élément de jonction et d'amortissement relativement souple, coopérant avec des moyens de liaison indépendants, interposés entre cesdits rebords inférieur et supérieur, de manière à assurer une liaison étanche entre ledit silo et son fond vibrant tout en interdisant la transmission de vibrations de l'un à l'autre.

Dans un type de matériel connu, l'élément de jonction se présente sous la forme d'un joint périphérique de section en U, ouvert vers l'extérieur et interposé entre le bas du silo et le fond vibrant. La liaison de l'élément de jonction, du bas du silo et du fond vibrant s'effectue par l'intermédiaire de deux brides plates, indépendantes l'une de l'autre, destinées à être rapportées contre les ailes horizontales supérieure et inférieure dudit joint en U pour les appliquer contre lesdits rebords inférieur et supérieur.

Dans ce dispositif une fois le joint en position entre les rebords périphériques respectifs du bas du silo et du fond vibrant, on procède à sa fixation par l'intermédiaire de deux séries de boulons, rapprochés les uns des autres et traversant de manière équidistante chacun des rebords périphériques, pour coopérer en serrage avec chacune des brides après avoir traversé les ailes horizontales du joint en U et le maintenir ainsi enserré.

La mise en place d'un tel joint connu assure en fait uniquement l'étanchéité entre le bas du silo et le fond vibrant.

Concrètement la fixation du fond vibrant par rapport au silo, et l'amortissement des vibrations sont effectués, par l'intermédiaire de quatre silent-blocs, diamétralement opposés deux à deux, coopérant avec quatre points d'appui réalisés sur le rebord inférieur du silo, en regard de quatre autres points d'appui réalisés sur le rebord supérieur du fond vibrant.

Dans ce dispositif connu, la totalité du poids du fond vibrant, et du produit qui est susceptible d'y être contenu, est donc supportée par les quatre silent-blocs.

La réalisation et la mise en oeuvre de cette technique sur le silo occasionnent bien entendu un coût supplémentaire de ce dernier et de plus il s'en suit une localisation des contraintes en quatre points uniquement, ce qui nécessite un renforcement, notamment par l'intermédiaire de goussets rapportés autour de la partie inférieure du silo, et de tôles de forte épaisseur.

Par ailleurs, selon ce même dispositif, il y a nécessité de réaliser deux brides indépendantes qui constituent des pièces supplémentaires, nécessitant une mise en place particulière occasionnant un surcroît de main d'oeuvre.

La présente invention a pour but de remédier à ces inconvénients et concerne à cet effet un silo, notamment vertical, destiné au stockage de produits pulvérulents par exemple, et présentant un fond vibrant, apte à favoriser l'écoulement, et à équiper le corps du silo par l'intermédiaire d'un élément de jonction et de moyens de fixation et/ou d'amortissement, prévus pour assurer une liaison étanche entre ledit corps du silo et le fond vibrant, tout en interdisant la transmission des vibrations de l'un à l'autre, caractérisé en ce que l'élément de jonction se présente sous la forme d'un joint autoporteur périphérique, élastiquement déformable, interposé directement et librement entre le corps du silo et le fond vibrant, coopérant avec lesdits moyens de fixation et/ou d'amortissement pour assurer à la fois une fonction d'étanchéité et une fonction d'amortissement, sans discontinuité sur toute sa périphérie portante.

Les avantages procurés par l'invention concernent donc la suppression desdites brides précitées et conséquemment leur montage, une répartition uniforme des forces, la possibilité d'utiliser une tôle plus fine notamment pour la réalisation du fond vibrant, l'obtention d'une souplesse uniforme du joint assurant une répartition uniforme des vibrations.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
- la figure 1 est une vue en plan, pour moitié en coupe, de la partie inférieure d'un silo muni d'un fond vibrant, selon l'invention.
- la figure 2 est une vue de dessus selon la figure 1.
- la figure 3 est une vue en coupe à échelle agrandie des moyens de liaison, selon l'invention, entre le silo et le fond vibrant.
- la figure 4 est une section d'un joint autoporteur selon l'invention, représenté à l'état de repos.

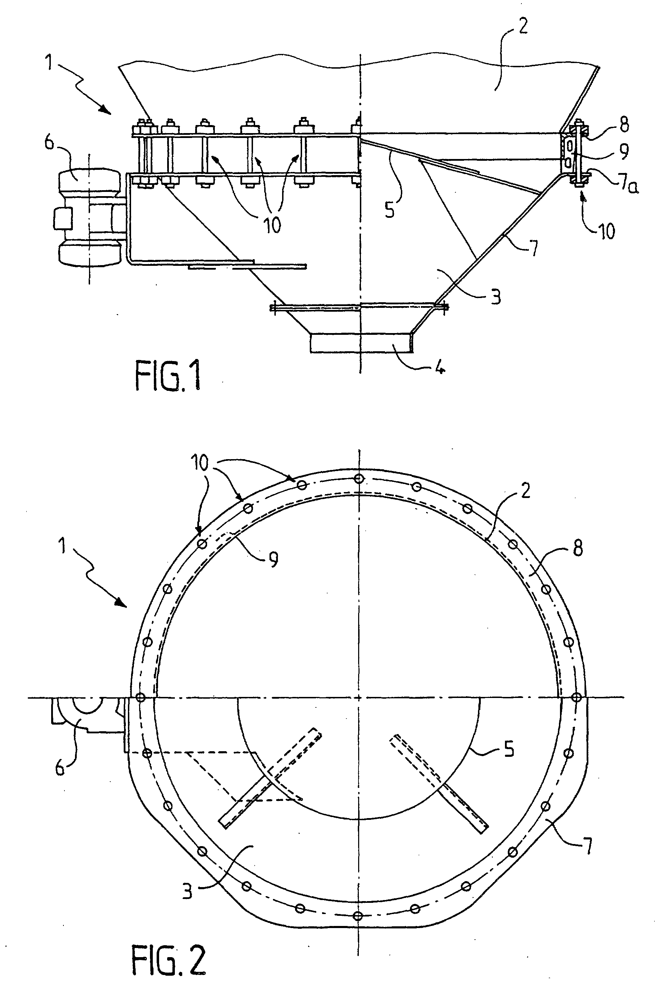

La figure 1 illustre la partie inférieure d'un corps 2 d'un silo 1, notamment d'axe vertical et de section cylindrique ou autre, formant la zone de stockage des matières pulvérulentes, équipé d'un fond vibrant 3.

Le silo 1 peut être également muni de pieds par lesquels il est assujetti au sol.

Le fond vibrant 3 présente une section correspondante pour prolonger et équiper le silo 1. Il présente également à sa partie inférieure un orifice de vidange 4 par lequel la matière pourra s'écouler.

Pour favoriser l'écoulement des produits pulvérulents, le fond vibrant 3 est constitué d'une enveloppe extérieure 7, notamment de forme tronconique, et, le cas échéant, d'un déflecteur central 5 interne, se présentant par exemple sous la forme d'un contre-cône.

Le fond vibrant 3 comporte des moyens de mise en vibration, notamment constitués par un mécanisme moteur à balourd 6.

Un tel agencement de silo ainsi que de tels moyens de vibration sont connus de l'homme de l'art.

Comme visible sur les figures, l'enveloppe 7 du fond vibrant 3 comporte un rebord supérieur périphérique plan 7ₐ réalisé en regard d'un rebord inférieur correspondant 8 du silo, en vue de leur assemblage. La liaison s'effectue par l'intermédiaire d'un élément de jonction 9 et de moyens de fixation 10 et/ou d'amortissement, destinés à être interposés entre ces deux plans 7ₐ, 8, de manière à assurer à la fois une liaison étanche entre ledit corps 2 du silo 1 et le fond vibrant 3, tout en interdisant la transmission des vibrations de l'un à l'autre.

Selon l'invention, l'élément de jonction 9 se présente sous la forme d'un joint autoporteur périphérique, élastiquement déformable, interposé directement et librement entre le corps du silo 1 et le fond vibrant 3, notamment respectivement lesdeux rebords inférieur 8 et supérieur 7ₐ.

Le joint autoporteur 9 coopère avec lesdits moyens 10 de fixation et/ou d'amortissement et est notamment maintenu en position par une pluralité d'éléments de fixation 10 interposés entre lesdits rebords 8 et 7ₐ, ledit joint assurant à la fois une fonction d'étanchéité et une fonction d'amortissement, sans discontinuité sur toute sa périphérie portante.

Comme le montre particulièrement bien la figure 2, les rebords inférieur 8 et supérieur 7ₐ respectivement du silo 1 et du fond vibrant 3, qui sont constitués notamment par des collerettes, sont situés dans des plans espacés sensiblement parallèles et sont traversés perpendiculairement de manière uniformément répartie sur leur périphérie, par les moyens de fixation et/ou d'amortissement 10 afin d'assurer la liaison du fond vibrant 3 sur le silo 1, tout en circonscrivant le joint autoporteur 9, pour le contenir dans l'espace défini par lesdits rebords inférieur 8 et supérieur 7ₐ.

Selon une forme de réalisation avantageuse, le rebord inférieur 8, en forme notamment de collerette, présente à partir de sa périphérie interne, un bord tombé cylindrique formant une virole, contre la paroi extérieure 11a de laquelle prend appui concentriquement une paroi interne correspondante du joint autoporteur 9, de manière à contenir celui-ci, entre ladite virole 11 et les moyens de fixation et/ou d'amortissement 10, dans un plan horizontal, et entre les deux rebords 8 et 7ₐ selon un axe vertical.

Par ailleurs, le joint autoporteur 9 présente, dans une zone supérieure de sa paroi périphérique interne, une partie 9a évidée concentriquement, destinée à coopérer avec la partie inférieure du corps 2 du silo, et notamment avec la virole 11, et délimitée axialement par un épaulement 9b; également périphérique, constituant une butée pour ladite virole 11.

Selon une autre caractéristique du joint autoporteur 9, celui-ci présente un plan supérieur 9c et un plan inférieur 9d constituant des prises d'appui respectivement sur le rebord inférieur 8 du silo 1 et sur le rebord supérieur 7ₐ du fond vibrant 3, ledit plan supérieur 9_{c} et/ou le plan inférieur 9_{d} comportant une lèvre concentrique 12A et/ou 12B destinées à s'écraser élastiquement lors du montage du joint 9 et de la mise en place des moyens de fixation et/ou d'amortissement 10.

Selon une autre caractéristique du joint autoporteur 9, le plan inférieur 9_{d} de celui-ci présente une excroissance concentrique 13 réalisée sur son bord interne, destinée à coopérer avec le rebord 7-7ₐ du fond de silo 3, formant notamment avec ledit plan un angle sensiblement égal à celui formé par la collerette 7ₐ avec sa paroi tronconique, prévu pour épouser le rebord supérieur 7ₐ du fond vibrant 3 de manière à chausser celle-ci au montage.

De manière à mieux se loger autour de la virole 11, le plan supérieur 9c du joint autoporteur 9 est relié à sa partie évidée périphérique 9a par un pan coupé 14, également périphérique.

Selon une autre caractéristique de l'invention, le matériau élastiquement déformable constituant le joint autoporteur 9 est évidé dans la masse pour présenter des canaux périphériques 15 de nombres, de formes et de dimensions, tels à lui conférer un pouvoir de souplesse et de rémanence par rapport à sa résistance, selon un compromis choisi et prédéterminé.

En particulier, la hauteur du joint sera prévue pour obtenir un bon compromis souplesse/compression, tandis que sa largeur participera à la résistance du joint autoporteur.

Le matériau élastiquement déformable constituant le joint autoporteur 9, pourra être choisi parmi les élastomères tels qu'un mélange de propylène éthylène.

Dans un cas comme dans l'autre, des essais ont démontré que d'excellents résultats étaient obtenus avec une dureté shore de 70 ± 20%.

Avantageusement, le joint autoporteur 9, obtenu à partir d'un matériau élastiquement déformable, est réalisé par extrusion.

Selon une autre caractéristique de l'invention, les moyens de fixation et/ou d'amortissement 10 du fond vibrant 3 sur le silo 1 sont constitués par une pluralité de boulons prenant appui de part et d'autre, notamment des collerettes 8 et 7ₐ. En outre, sur les boulons est exercé au montage, un serrage contrôlé de manière à obtenir en service, une précontrainte du joint selon une valeur prédéterminée en fonction du degré d'amortissement souhaité.

Il est à noter qu'un tel montage permet de prévoir la fixation des éléments au plus près et réduit le couple de torsion engendré au niveau des collerettes inférieure 8 et supérieure 7ₐ, ce qui permet de prévoir une réduction d'épaisseur des tôles les constituant.

Selon une autre caractéristique de l'invention, la mise en appui des têtes de vis 18a et les écrous 18b, formant les boulons 18, s'effectue par l'intermédiaire de rondelles 16A, 16B réalisées en élastomère et interposées entre les têtes de vis 18a et les écrous 18b d'une part, et notamment la collerette supérieure 7ₐ du fond vibrant 3; et notamment la collerette inférieure 8 du corps 2 du silo 1 d'autre part, de manière à contribuer à l'effet d'amortissement conféré par le joint autoporteur 9 et à constituer un frein s'opposant à leur dévissage.

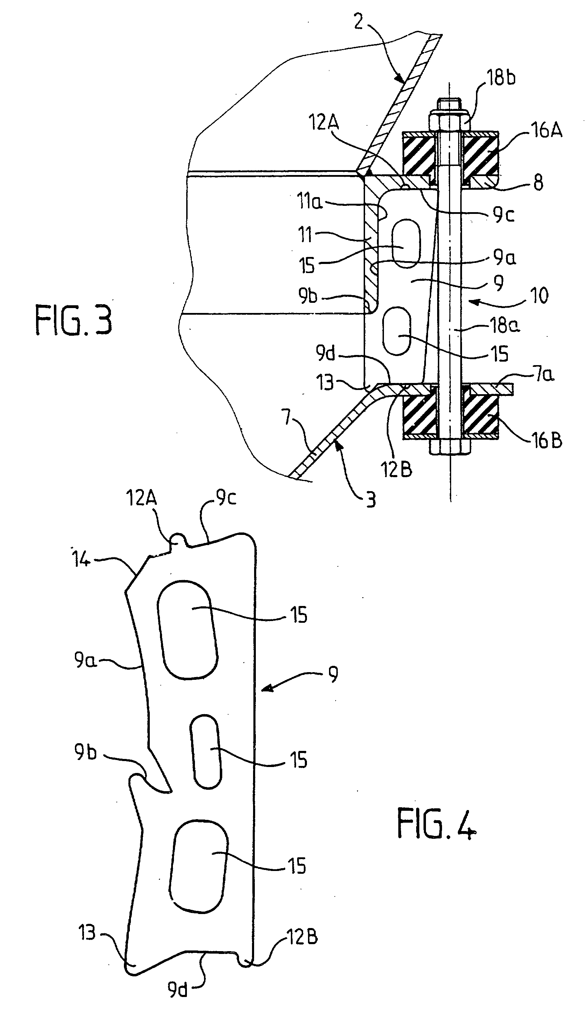

Il est bien entendu que le profil représenté à la figure 4 n'est qu'un exemple illustratif et que cette section pourra être de toute autre forme.

En effet, un joint autoporteur selon l'invention pourra également être constitué par un joint torique, ou à section carrée, rectangulaire, évidée ou non évidée.

Egalement en ce qui concerne sa structure, il pourra être constitué de tout autre matériau, pourvu qu'il soit élastiquement déformable et apte à constituer un joint autoporteur.

## Revendications

1. Silo (1), notamment vertical, destiné au stockage de produits pulvérulents par exemple, et présentant un fond vibrant (3) apte à favoriser l'écoulement, et à équiper le corps (2) du silo (1) par l'intermédiaire d'un élément de jonction (9) et de moyens de fixation et/ou d'amortissement (10) prévus pour assurer une liaison étanche entre le corps du silo et le fond vibrant, tout en interdisant la transmission des vibrations de l'un vers l'autre, l'élément de jonction (9) se présentant sous la forme d'un joint autoporteur périphérique, élastiquement déformable, interposé directement et librement entre le corps (2) du silo (1) et le fond vibrant (3), coopérant avec lesdits moyens de fixation et/ou d'amortissement (10) pour assurer à la fois une fonction d'étanchéité et une fonction d'amortissement, sans discontinuité sur toute sa périphérie portante, **caractérisé en ce que** ledit joint présente un plan supérieur (9_{c}) et un plan inférieur (9_{d}) constituant des prises d'appui respectivement sur le bord inférieur (8) du silo (1) et sur le rebord supérieur (7ₐ) du fond vibrant (3).

2. Silo, selon la revendication 1, dans lequel ledit rebord supérieur périphérique plan (7ₐ) est réalisé en regard du rebord inférieur correspondant (8) du silo en vue de leur liaison, les rebords inférieur (8) et supérieur (7ₐ), respectivement du silo (1) et du fond vibrant (3), étant situés dans des plans espacés sensiblement parallèles et étant traversés perpendiculairement de manière uniformément répartie sur leur périphérie, par lesdits moyens de fixation et/ou d'amortissement (10) afin d'assurer la liaison du fond vibrant (3) sur le silo (1), tout en circonscrivant le joint autoporteur (9), pour le contenir dans l'espace défini par lesdits rebords inférieur (8) et supérieur (7ₐ).

3. Silo, selon la revendication 2, dans lequel ledit rebord inférieur (8), en forme de collerette, présente à partir de sa périphérie interne, un bord tombé cylindrique, formant une virole, contre la paroi extérieure (11ₐ) de laquelle prend appui concentriquement une paroi interne correspondante du joint autoporteur (9), de manière à contenir celui-ci, entre ladite virole (11) et les moyens de fixation et/ou d'amortissement (10), dans un plan horizontal, et entre les deux rebords (8 et 7ₐ), selon un axe vertical.

4. Silo, selon la revendication 3, dans lequel le joint autoporteur (9) présente, dans une zone supérieure de sa paroi périphérique interne, une partie (9ₐ) évidée concentriquement, destinée à coopérer avec la virole (11) et délimitée axialement par un épaulement (9_{b}), également périphérique, constituant une butée pour ladite virole (11).

5. Silo, selon la revendication 2, dans lequel le joint autoporteur (9) présente un plan supérieur (9_{c}) et un plan inférieur (9_{d}) constituant des prises d'appui respectivement sur le rebord inférieur (8) du silo (1) et sur le rebord supérieur (7ₐ) du fond vibrant (3), ledit plan supérieur (9_{c}) et/ou le plan inférieur (9_{d}) comportant une lèvre concentrique (12A, 12B) destinées à s'écraser élastiquement lors du montage du joint (9) et de la mise en place des moyens de fixation et/ou d'amortissement (10).

6. Silo, selon la revendication 5, dans lequel le plan inférieur (9_{d}) du joint autoporteur (9) présente une excroissance concentrique (13) réalisée sur son bord interne et prévue pour épouser le rebord supérieur (7ₐ) du fond vibrant (3) et sa paroi tronconique, de manière à chausser celle-ci au montage.

7. Silo, selon une des revendications 1 à 6, dans lequel le matériau élastiquement déformable constituant le joint autoporteur (9) est évidé dans la masse pour présenter des canaux périphériques (15) de nombres, de formes et de dimensions, tels à lui conférer un pouvoir de souplesse et de rémanence par rapport à sa résistance, selon un compromis choisi et prédéterminé.

8. Silo, selon la revendication 1, dans lequel le matériau élastiquement déformable constituant le joint autoporteur (9) est choisi parmi les élastomères de dureté shore 70 plus ou moins 20 %.

9. Silo, selon la revendication 1, dans lequel les moyens de fixation et/ou d'amortissement (10) du fond vibrant (3) sur le silo (1) sont constitués par une pluralité de boulons, prenant appui de part et d'autre, sur lesquels boulons est exercé au montage, un serrage contrôlé de manière à obtenir en service, une précontrainte du joint selon une valeur prédéterminée en fonction du degré d'amortissement souhaité.

10. Silo, selon la revendication 9, dans lequel la mise en appui des têtes de vis (10ₐ) et les écrous (10_{b}) formant les boulons (10), s'effectue par l'intermédiaire de rondelles (16A, 16B) réalisées en élastomère et interposées entre les têtes de vis (10ₐ) et les écrous (10_{b}) d'une part et le fond vibrant (3) et le corps (2) du silo (1) d'autre part, de manière à contribuer à l'effet d'amortissement conféré par le joint autoporteur (9) et constituer un frein s'opposant à leur dévissage.

11. Fond vibrant (3) de silo (1), spécialement conçu pour équiper un silo (1) selon l'une quelconque des revendications précédentes, apte à favoriser l'écoulement, et à équiper le corps (2) du silo (1) par l'intermédiaire d'un élément de jonction (9) et de moyens de fixation et/ou d'amortissement (10) prévus pour assurer une liaison étanche entre le corps du silo et le fond vibrant tout en interdisant la transmission des vibrations de l'un vers l'autre, **caractérisé en ce que** l'élément de jonction (9) se présente sous la forme d'un joint autoporteur périphérique, élastiquement déformable, interposé directement et librement entre le corps (2) du silo (1) et le fond vibrant (3) coopérant avec lesdits moyens de fixation et/ou d'amortissement (10) pour assurer à la fois une fonction d'étanchéité et une fonction d'amortissement, sans discontinuité sur toute sa périphérie portante, **caractérisé en ce que** ledit joint présente un plan supérieur (9_{c}) et un plan inférieur (9_{d}) constituant des prises d'appui respectivement sur le bord inférieur (8) du silo (1) et sur le rebord supérieur (7ₐ) du fond vibrant (3).

12. Joint, spécialement conçu pour être interposé entre un silo (1) et un fond vibrant (3) selon l'une des revendications 1 à 10, autoporteur périphérique, élastiquement déformable, interposé directement et librement entre le corps (2) du silo (1) et le fond vibrant (3), coopérant avec des moyens de fixation et/ou d'amortissement (10) pour assurer à la fois une fonction d'étanchéité et une fonction d'amortissement, sans discontinuité sur toute sa périphérie portante, **caractérisé en ce que** ledit joint présente un plan supérieur (9_{c}) et un plan inférieur (9_{d}) constituant des prises d'appui respectivement sur le bord inférieur (8) du silo (1) et sur le rebord supérieur (7ₐ) du fond vibrant (3).

## Claims

1. A silo (1), substantially vertical, intended for storing pulverulent products, for example, and having a vibrating bottom (3) capable of promoting the flow, and of fitting the body (2) of the silo (1) via a junction element (9) and fastening and/or shock-absorbing means (10) designed to ensure a tight link between the body of the silo and the vibrating bottom, while preventing the transmission of the vibrations from one to another, the junction element (9) being in the form of a peripheral self-supporting seal, elastically deformable, interposed directly and freely between the body (2) of the silo (1) and the vibrating bottom (3), co-operating with said fastening and/or shock-absorbing means (10) simultaneously for tightness and shock-absorbing purposes, without any discontinuity over its carrying periphery, **characterised in that** said seal has an upper plane (9_{c}) and a lower plane (9_{d}) forming bearing grips respectively on the lower rim (8) of the silo (1) and on the upper rim (7ₐ) of the vibrating bottom (3).

2. A silo according to claim 1, wherein said upper plane peripheral rim (7ₐ) is provided opposite the corresponding lower rim (8) of the silo for linking thereof, the lower (8) and upper (7ₐ) rims, respectively of the silo (1) and of the vibrating bottom (3) being situated on spaced apart planes, substantially parallel and being traversed perpendicularly, uniformly over their periphery, by said fastening and/or shock-absorbing means (10) in order to link the vibrating bottom (3) to the silo (1), while circumscribing the self-supporting seal (9), in order to contain said seal in the space defined by said lower (8) and upper (7ₐ) rims.

3. A silo according to claim 2, wherein said lower rim (8), in the form of a collar, exhibits from its inner periphery, a cylindrical folded rim, forming a ferrule, against the outer wall (11ₐ) from which bears concentrically a corresponding inner wall of the self-supporting seal (9), in order to contain said seal, between said ferrule (11) and the fastening and/or shock-absorbing means (10) in a horizontal plane, and between both rims (8 and 7ₐ), along a vertical axis.

4. A silo according to claim 3, wherein the self-supporting seal (9) exhibits, in an upper zone of its inner peripheral wall, a concentrically recessed portion (9ₐ), intended to co-operate with the ferrule (11) and delineated axially by a shoulder (9_{b}), also peripheral, forming a stop for said ferrule (11).

5. A silo according to claim 2, wherein said self-supporting seal (9) exhibits an upper plane (9_{c}) and a lower plane (9_{d}) forming bearing grips respectively on the lower rim (8) of the silo (1) and on the upper rim (7a) of the vibrating bottom (3), said upper plane (9_{c}) and/or the lower plane (9_{d}) including a concentric lip (12A, 12B) intended to collapse elastically when installing the seal (9) and placing fastening and/or shock-absorbing means (10).

6. A silo according to claim 5, wherein the lower plane (9_{d}) of the self-supporting seal (9) exhibits a concentric excrescency (13) formed on its inner edge and intended to match the upper rim (7ₐ) of the vibrating bottom (3) and its truncated wall, in order to catch it during installation.

7. A silo according to one of the claims 1 to 6, wherein the elastically deformable material forming the self-supporting seal (9) is recessed in its thickness in order to form peripheral channels (15) whereof the numbers, the shapes and the sizes are such as to confer it a power of flexibility and of remanence with respect to its resistance, according to a selected and predetermined compromise.

8. A silo according to claim 1, wherein the elastically deformable material forming the self-supporting seal (9) is selected among the elastomers of Shore hardness 70, ± 20 %.

9. A silo according to claim 1, wherein the fastening and/or shock-absorbing means (10) of the vibrating bottom (3) on the silo (1) are formed by a plurality of bolts, resting in either side, on which bolts is exerted controlled clamping during assembly in order to obtain in service a seal pre-stressed according to a predetermined value in relation to the degree of shock-absorption requested.

10. A silo according to claim 9, wherein the screw heads (10ₐ) and the nuts (10_{b}) forming the bolts (10) are stressed by means of washers (16A, 16B) made of elastomer and interposed between the screw heads (10ₐ) and the nuts (10_{b}) on the one hand, and the vibrating bottom (3) and the body (2) of the silo (1) on the other, in order to contribute to the shock-absorbing effect conferred by the self-supporting seal (9) and to prevent them from becoming loose.

11. A vibrating bottom (3) of silo (1), especially designed to fit a silo (1) according to any of the previous claims, capable of promoting the flow, and of fitting the body (2) of the silo (1) via a junction element (9) and fastening and/or shock-absorbing means (10) provided to ensure a tight link between the body of the silo and the vibrating bottom, while preventing the transmission of the vibrations from one to another, the junction element (9) being in the form of a peripheral self-supporting seal, elastically deformable, interposed directly and freely between the body (2) of the silo (1) and the vibrating bottom (3), co-operating with said fastening and/or shock-absorbing means (10) simultaneously for tightness and shock-absorbing purposes, without any discontinuity over its carrying periphery, **characterised in that** said seal has an upper plane (9_{c}) and a lower plane (9_{d}) forming bearing grips respectively on the lower rim (8) of the silo (1) and on the upper rim (7ₐ) of the vibrating bottom (3).

12. A self-supporting seal, especially intended to be interposed between a silo (1) and a vibrating bottom (3) according to one of the claims 1 to 10, elastically deformable, interposed directly and freely between the body (2) of the silo (1) and the vibrating bottom (3), co-operating with fastening and/or shock-absorbing means (10) simultaneously for tightness and shock-absorbing purposes, without any discontinuity over its carrying periphery, **characterised in that** said seal has an upper plane (9_{c}) and a lower plane (9_{d}) forming bearing grips respectively on the lower rim (8) of the silo (1) and on the upper rim (7ₐ) of the vibrating bottom (3).

## Patentansprüche

1. Silo (1), insbesondere vertikal, für die Lagerung von beispielsweise pulverigen Produkten, der einen vibrierenden Boden (3) aufweist, der geeignet ist, den Ablaß zu begünstigen und den Körper (2) des Silos (1) über ein Verbindungselement (9) und Mittel zur Befestigung und/oder zur Dämpfung (10) auszustatten, vorgesehen, um eine wasserdichte Verbindung zwischen dem Körper des Silos und dem vibrierenden Boden zu gewährleisten, während die Übertragung der Vibrationen von dem einen zum anderen untersagt wird, wobei das Verbindungselement (9) als eine elastisch verformbare, selbsttragende peripherische Dichtung ausgestalltet ist, die direkt und frei zwischen dem Körper (2) des Silos (1) und dem vibrierenden Boden (3) eingesetzt ist und mit den besagten Mitteln zur Befestigung und/oder zur Dämpfung (10) zusammenwirkt, um sowohl eine Abdichtungsfunktion als auch eine Dämpffunktion ohne Unterbrechung über ihren ganzen tragenden Umkreis zu gewährleisten, **dadurch gekennzeichnet, daß** die besagte Dichtung eine obere Ebene (9_{c}) und eine untere Ebene (9_{d}) aufweist, welche die Abstützungen auf dem unteren Rand (8) des Silos (1), bzw. auf der oberen Randkante (7ₐ) des vibrierenden Bodens (3) bilden.

2. Silo nach Anspruch 1, bei dem die besagte obere flache peripherische Randkante (7ₐ) der entsprechenden unteren Randkante (8) des Silos angesichts ihrer Verbindung gegenüberliegend ausgeführt ist, wobei die untere Randkante (8) und die obere Randkante (7ₐ) des Silos (1) bzw. des vibrierenden Bodens (3) sich in abstehenden, im wesentlichen parallelen Ebenen befinden und gleichmäßig verteilt auf ihrer Peripherie von den besagten Mittel zur Befestigung und/oder zur Dämpfung (10) senkrecht durchsetzt werden, um die Verbindung des vibrierenden Bodens (3) am Silo (1) zu gewährleisten, während die selbsttragende Dichtung (9) umgrenzt wird, um diese in den Raum einzuschließen, der durch die besagte untere Randkante (8) und die besagte obere Randkante (7ₐ) gebildet ist.

3. Silo nach Anspruch 2, bei dem die besagte untere Randkante (8) in Form eines Kragens ab ihrer inneren Peripherie einen zylindrischen gebogenen Rand aufweist, der einen Ring bildet, gegen dessen Außenwand (11ₐ) sich eine entsprechende innere Wand der selbsttragenden Dichtung (9) konzentrisch abstützt, um diesen zwischen dem besagten Ring (11) und den Mitteln zur Befestigung und/oder zur Dämpfung (10) in einer horizontalen Ebene, und zwischen den beiden Randkanten (8 und 7ₐ) nach einer vertikalen Achse, einzuschließen.

4. Silo nach Anspruch 3, bei dem die selbsttragende Dichtung (9) in einer oberen Zone ihrer inneren peripherischen Wand einen konzentrisch ausgehöhlten Teil (9ₐ) aufweist, vorgesehen, mit dem Ring (11) zusammenzuwirken, und axial durch einen ebenfalls peripherischen Ansatz (9_{b}) abgegrenzt ist, der einen Anschlag für den besagten Ring (11) bildet.

5. Silo nach Anspruch 2, bei dem die besagte selbsttragende Dichtung (9) eine obere Ebene (9_{c}) und eine untere Ebene (9_{d}) aufweist, die Abstützungen auf der unteren Randkante (8) des Silos (1), bzw. auf der oberen Randkante (7ₐ) des vibrierenden Bodens (3) bilden, wobei die besagte obere Ebene (9_{c}) und/oder die untere Ebene (9_{d}) eine konzentrische Lippe (12A, 12B) umfassen, vorgesehen, bei der Montage der Dichtung (9) und bei der Anbringung der Mittel zur Befestigung und/oder zur Dämpfung (10) elastisch zerdrückt zu werden.

6. Silo nach Anspruch 5, bei dem die untere Ebene (9_{d}) der selbsttragenden Dichtung (9) einen konzentrischen Auswuchs (13) aufweist, der auf ihrem inneren Rand ausgeführt und vorgesehen ist, sich der oberen Randkante (7ₐ) des vibrierenden Bodens (3) und deren abgestumpften Wand anzupassen, damit diese bei der Montage gut anliegt.

7. Silo nach einem der Ansprüche 1 bis 6, bei dem das elastisch verformbare Material, das die selbsttragende Dichtung (9) bildet, in der Masse ausgehöhlt ist, um peripherische Kanäle (15) solcher Anzahlen, Formen und Abmessungen aufzuweisen, die ihm eine Fähigkeit zur Anpassung und Remanenz hinsichtlich seines Widerstandes nach einem ausgewählten und im voraus bestimmten Kompromißes verleihen.

8. Silo nach Anspruch 1, bei dem das elastisch verformbare Material, das die selbsttragende Dichtung (9) bildet, unter den Elastomeren der Shore-Härtestufe 70 plus oder minus 20 % gewählt ist.

9. Silo nach Anspruch 1, bei dem die Mittel zur Befestigung und/oder zur Dämpfung (10) des auf dem Silo (1) vibrierenden Bodens (3) durch eine Mehrheit von Bolzen gebildet sind, die beiderseits abstützen, auf welche Bolzen bei der Montage eine kontrollierte Spannkraft ausgeübt wird, um bei Betrieb eine Vorspannung der Dichtung nach einem vorbestimmten Wert in Abhängigkeit von dem erwünschten Dämpfungsgrad zu erhalten.

10. Silo nach Anspruch 9, bei dem das Abstützen der die Bolzen (10) bildenden Schraubenköpfe (10ₐ) und Muttern (10_{b}) mit Hilfe der Unterlegescheiben (16A, 16B) ausgeführt wird, die aus einem Elastomer hergestellt sind und zwischen den Schraubenköpfen (10ₐ) und den Muttern (10_{b}), einerseits, und, andererseits, dem vibrierenden Boden (3) und dem Körper (2) des Silos (1), eingesetzt sind, um zu der durch die selbsttragende Dichtung (9) verliehene Dämpfwirkung beizutragen und eine Bremse zu bilden, die sich ihrem Losschrauben widersetzt.

11. Vibrierender Boden (3) eines Silos (1), insbesondere vorgesehen, um einen Silo (1) nach irgendeinem der vorgehenden Ansprüche auszustatten, der geeignet ist, den Ablaß zu begünstigen und den Körper (2) des Silos (1) über ein Verbindungselement (9) und Mittel zur Befestigung und/oder zur Dämpfung (10) auszustatten, vorgesehen, um eine wasserdichte Verbindung zwischen dem Körper des Silos und dem vibrierenden Boden zu gewährleisten, während die Übertragung der Vibrationen von dem einen zum anderen untersagt wird, **dadurch gekennzeichnet, daß** das Verbindungselement (9) als eine elastisch verformbare selbsttragende peripherische Dichtung ausgestalltet ist, die direkt und frei zwischen dem Körper (2) des Silos (1) und dem vibrierenden Boden (3) eingesetzt ist und mit den besagten Mitteln zur Befestigung und/oder zur Dämpfung (10) zusammenwirkt, um sowohl eine Abdichtungsfunktion als auch eine Dämpffunktion ohne Unterbrechung auf ihren ganzen tragenden Umkreis zu gewährleisten, **dadurch gekennzeichnet, daß** die besagte Dichtung eine obere Ebene (9_{c}) und eine untere Ebene (9_{d}) aufweist, welche die Abstützungen auf dem unteren Rand (8) des Silos (1), bzw. auf der oberen Randkante (7ₐ) des vibrierenden Bodens (3) bilden.

12. Elastisch verformbare, selbsttragende, peripherische Dichtung, insbesondere vorgesehen, um zwischen einem Silo (1) und einem vibrierenden Boden (3) nach einem der Ansprüche 1 bis 10 eingelegt zu werden, die direkt und frei zwischen dem Körper (2) des Silos (1) und dem vibrierenden Boden (3) eingesetzt ist und mit den Mitteln zur Befestigung und/oder zur Dämpfung (10) zusammenwirkt, um sowohl eine Abdichtungsfunktion als auch eine Dämpffunktion ohne Unterbrechung auf ihren tragenden Umkreis zu gewährleisten, **dadurch gekennzeichnet, daß** die besagte Dichtung eine obere Ebene (9_{c}) und eine untere Ebene (9_{d}) aufweist, welche die Abstützungen auf dem unteren Rand (8) des Silos (1), bzw. auf der oberen Randkante (7ₐ) des vibrierenden Bodens (3) bilden.
